# DEMANDE DE BREVET EUROPEEN

(11) **EP 4 560 748 A1**
(43) Date de publication de la demande: **28.05.2025**
(21) Numéro de dépôt: 23307031.7
(22) Date de dépôt: 22.11.2023
(51) Int. Cl.: H01M 10/04, H01M 10/54

(54) **EQUIPEMENT POUR LA SEPARATION ET LE CONTROLE D'AU MOINS UNE ELECTRODE D'UN SEPARATEUR D'UN COMPOSANT DE BATTERIE**

(71) Demandeur: Automotive Cells Company SE, 33520 Bruges (FR)
(72) Inventeur: ROBIN, Rémi, 33110 Le Bouscat (FR)
(74) Mandataire: Alatis

(57) **Abrégé**

L'invention concerne un équipement (1) pour la séparation d'au moins une électrode (2) d'un séparateur (3) d'un composant (4) de batterie du type comprenant un séparateur (3) en forme de bande (5) et d'électrodes (2, 2', 2") en feuilles, l'équipement (1) comprenant au moins : une zone d'approvisionnement (10) configurée pour loger le composant (4) de batterie ; et un rouleau d'entraînement et de stockage (20) du séparateur (3) configuré pour être relié à une portion d'extrémité de la bande (5), le rouleau d'entraînement et de stockage (20) comprenant des moyens motorisés pour assurer une traction sur la bande (5) du composant (4) de batterie et permettre le convoyage de la bande (5) suivant un chemin de convoyage (W) depuis la zone d'approvisionnement (10) jusqu'au rouleau d'entraînement et de stockage (20) en étant guidée par des moyens de guidage (30) de ladite bande (5) ; les moyens de guidage (30) de la bande comprenant au moins un rouleau de séparation (31), l'équipement étant configuré pour que le rouleau de séparation (31) forme un renvoi d'angle de la bande (5) le long du chemin de convoyage (W) de sorte qu'une portion aval (5B) de la bande (5) en aval du rouleau de séparation (31) par rapport au chemin de convoyage (W) présente un angle de séparation (α1) non nul avec une portion amont (5A) de la bande (5) en amont du rouleau de séparation, les moyens de guidage (30) de la bande (5) le long du chemin de convoyage (W) et le rouleau de séparation (31) étant configurés de sorte à permettre ensemble, un décollement des électrodes (2) au passage de ces électrodes (2) au niveau du renvoi d'angle du rouleau de séparation (31).

## Description

### DOMAINE TECHNIQUE DE L'INVENTION

L'invention concerne, de façon générale, le domaine technique des dispositifs de stockage d'énergie, et concerne en particulier un équipement pour la séparation d'au moins une électrode d'une couche d'isolant électrique d'un composant de batterie, généralement appelée séparateur.

L'invention concerne également le domaine technique du recyclage des matériaux constitutifs de tels dispositifs de stockage d'énergie, et en particulier des moyens et procédés de qualification desdits matériaux constitutifs aux fins de recyclage.

Les composants de batterie peuvent être typiquement, mais non limitativement, des cellules électrochimiques, utilisées dans des véhicules électriques ou hybrides, c'est-à-dire mus au moins partiellement par de l'énergie électrique, par exemple.

### ÉTAT DE LA TECHNIQUE ANTÉRIEURE

Les véhicules automobiles à traction ou propulsion électrique ou hybride, comportent un ou plusieurs modules de batterie reliés à un réseau de puissance pour alimenter un moteur électrique (de traction ou de propulsion).

Les modules de batterie sont regroupés dans un carter et forment alors un bloc batterie aussi souvent désigné par l'expression anglaise « battery pack», ce carter contenant généralement une interface de montage et des bornes de raccordement.

Chaque module de batterie comprend au moins une cellule électrochimique, généralement plusieurs cellules électrochimiques, générant du courant par réaction chimique, par exemple de type lithium-ion (ou Li-ion), de type Ni-Mh, ou Ni-Cd ou plomb.

Une cellule électrochimique comprend, en particulier, un empilement d'électrodes positives reliées les unes aux autres et un empilement d'électrodes négatives reliées les unes aux autres, séparées par un séparateur, connu sous le terme de « stack ». Les électrodes positives reliées les unes aux autres forment une borne positive, et les électrodes négatives reliées les unes aux autres forment une borne négative.

Il est connu d'assembler, en série et/ou en parallèle, une pluralité de cellules électrochimiques afin de réaliser les modules de batterie à l'aide d'un dispositif d'interconnexion assurant un contact électrique entre les bornes de deux cellules électrochimiques voisines.

Chaque cellule électrochimique est logée dans un boîtier, typiquement métallique. Le boîtier est généralement en aluminium. Une fois l'ensemble de cellules électrochimiques intégrées dans le boîtier, une plaque formant couvercle est soudée au boîtier par laser pour réaliser la connexion structurelle et l'étanchéité de la cellule électrochimique.

Afin d'assembler mécaniquement les cellules électrochimiques reliées électriquement, il est connu de les aligner sur un support plan ou un rail et de les maintenir aux deux extrémités compressées par des plaques parallèles fixes, un tel assemblage étant désigné sous le terme « module ».

La demande grandissante de véhicules électriques, et plus généralement de batteries, est directement corrélée à la problématique de respect de l'environnement et à la sécurité. Pour cette raison au moins, le recyclage de ces batteries et devenue une composante majeure dans la conception et la fabrication de ces batteries. De même, leur recyclage permet de réutiliser certains matériaux de matériels usagers pour la fabrication de nouveaux matériels. Ceci entraîne une économie d'échelle permettant de réduire le coût de production des batteries en plus de répondre à des questions environnementales limitant ainsi le besoin en métaux rares et/ou précieux. Par ailleurs, un tel recyclage doit être menée avec une qualité accrue pour obtenir des matériaux les plus purs possibles et ainsi ne pas nuire aux performances des matériels nouvellement fabriqués. Les recherches sur les procédés de fabrication des cellules visent ainsi à améliorer la qualité finale du produit, à réduire la quantité de matériaux utilisée, et à baisser les coûts de fabrication.

Classiquement, la fabrication d'une cellule électrochimique comprend au moins des étapes de fabrication des électrodes et d'assemblage de la cellule. Lors de cette étape d'assemblage de la cellule électrochimique, il est connu d'assembler l'électrode positive, l'électrode négative et un séparateur en couches (par exemple 20 à 30 couches) pour former une structure de cellule de format parallélépipédique type boîtier métallique (« prismatique ») ou enveloppe souple généralement métalloplastique (« pouch »), ou plus rarement de type spiralé dans un boîtier cylindrique (« cylindrique »). Ces formats traditionnels sont obtenus en enchaînant :
- une étape de découpage de l'électrode ;
- une étape d'assemblage des principaux constituants : électrodes positive, négative et séparateur, où le positionnement des différentes couches doit être très précis. L'assemblage consiste par exemple à empiler les constituants (« stacking ») s'agissant d'une cellule prismatique, ou à les enrouler (bobinage) dans le cas d'une cellule cylindrique ;
- une étape de soudure des bornes sur des collecteurs, par exemple en aluminium pour la borne positive, et en cuivre pour la borne négative ;
- une étape d'insertion de l'assemblage ainsi constitué dans le boîtier prismatique ;
- une étape d'injection d'électrolyte dans ledit boîtier; et
- une étape de scellement de la cellule, en particulier d'un couvercle avec le boîtier associé.

L'empilement des séparateurs à l'intérieur de la batterie est habituellement mis en oeuvre, en particulier pour des batteries prismatiques, selon la technique dite du « pliage en Z » ou « empilement en Z », soit en anglais « Z-folding » ou « Z-stacking ». Dans une telle configuration les séparateurs sont empilés uniformément en zigzag pour minimiser les efforts sur les cellules de la batterie et empêcher fondamentalement le contact entre les anodes et les cathodes ce qui pourrait provoquer un incendie.

Le recyclage de telles batteries nécessite de démanteler ou démonter un tel empilement, où divers procédés sont mis en oeuvre.

Les procédés de recyclage des batteries telles que des cellules électrochimiques, par exemple lithium-ion, sont formés de multiples étapes de transformation, qui peuvent être subdivisées en deux catégories principales : les procédés physiques et les procédés chimiques.

Les procédés physiques comprennent notamment le démontage, la séparation et le broyage des composants des batteries au lithium, en exploitant les différentes caractéristiques physiques des matériaux qui y sont présents (par exemple densité, propriétés magnétiques, solubilité). On les utilise principalement en guise de traitement préliminaire, pour séparer les matériaux de cathode et les matériaux d'anode d'autres composants, tels que les collecteurs de courant et les électrolytes, ce qui diminue les impuretés présentes et facilite les processus de récupération ultérieurs.

Les procédés chimiques comprennent la précipitation chimique, la dissolution, les extractions au solvant, les électrodépositions et les traitements thermiques. Ces procédés regroupent généralement des procédés pyrométallurgiques et des procédés hydrométallurgiques.

Quel que soit le ou les procédés mis en oeuvre, chacun de ces procédés connus est souvent long et complexe à mettre en oeuvre avec des taux de récupération souvent faibles.

Par ailleurs, une fois les matériaux récupérés pour procéder à leur recyclage, il est nécessaire de procéder à un certain nombre de tests pour qualifier le produit obtenu. Lorsqu'une cellule de batterie est démantelée, les matériaux récupérés doivent être qualifiés pour déterminer leur qualité et leur capacité à être réutilisés. La qualification des matériaux est une étape importante du processus de recyclage des batteries de véhicules électriques car elle permet d'identifier les matériaux qui peuvent être réutilisés pour la fabrication de nouvelles batteries.

La qualification des matériaux implique plusieurs étapes. Tout d'abord, les matériaux récupérés sont triés en fonction de leur type (par exemple, le lithium, le cobalt, le nickel, le cuivre, etc.). Ensuite, ils sont testés pour déterminer leur composition, leur pureté et leur qualité. Les tests peuvent inclure des analyses chimiques et physiques, ainsi que des tests de performance électrique.

Une fois que les matériaux ont été qualifiés, ils peuvent être réutilisés pour la fabrication de nouvelles batteries. Les matériaux de haute qualité peuvent être utilisés pour les batteries de nouvelle génération, tandis que les matériaux de qualité inférieure peuvent être utilisés pour des applications moins exigeantes, telles que les batteries de stockage d'énergie.

La qualification des matériaux est donc une étape cruciale du processus de recyclage des batteries de véhicules électriques. Elle permet de maximiser l'utilisation des matériaux récupérés et de minimiser le gaspillage, tout en contribuant à la durabilité environnementale de l'industrie des batteries.

Une autre contrainte des procédés de recyclages physiques est que dans certains cas, les moyens physiques utilisés sont de nature à former des défauts sur le matériau à recycler, pouvant nuire à la qualité de l'étape postérieure de qualification.

Par ailleurs, l'expertise des cellules ainsi menée (appelée « tear-down » en terme anglosaxon) et nécessaire pour la qualification du produit final implique un temps d'analyse long et une répétabilité de l'analyse soumise à « l'oeil » de l'opérateur.

Enfin, les procédés de recyclage et/ou les opérations de démantèlement sont généralement de nature à dégrader les matériaux récupérés rendant parfois peu fiable voire impossible l'expertise de la cellule associée pour la qualification du produit final.

### EXPOSE DE L'INVENTION

L'invention vise à remédier à tout ou partie des inconvénients de l'état de la technique en proposant notamment une solution permettant la séparation d'électrodes d'un séparateur d'un composant de batterie, ceci de façon non destructive, compatible avec un process de recyclage, et offrant de préférence une économie de temps dans le processus d'expertise aux fins de recyclage.

Pour ce faire est proposé, selon un premier aspect de l'invention, un équipement pour la séparation d'au moins une électrode d'un séparateur d'un composant de batterie du type comprenant un séparateur en forme de bande et d'au moins une électrode en feuille, l'équipement étant caractérisé en ce qu'il comprend au moins :
- une zone d'approvisionnement configurée pour loger le composant de batterie ; et
- un rouleau d'entraînement et de stockage du séparateur configuré pour être relié à une portion d'extrémité de la bande, le rouleau d'entraînement et de stockage comprenant des moyens motorisés pour assurer une traction sur la bande du composant de batterie et permettre le convoyage de la bande suivant un chemin de convoyage depuis la zone d'approvisionnement jusqu'au rouleau d'entrainement et de stockage en étant guidée par des moyens de guidage de ladite bande ;
les moyens de guidage de la bande comprenant au moins un rouleau de séparation, l'équipement étant configuré pour que le rouleau de séparation forme un renvoi d'angle de la bande le long du chemin de convoyage de sorte qu'une portion aval de la bande en aval du rouleau de séparation par rapport au chemin de convoyage présente un angle de séparation non nul avec une portion amont de la bande en amont du rouleau de séparation, la bande présentant une première face d'un premier côté extérieur au rouleau de séparation et une deuxième face d'un deuxième côté, du côté du rouleau de séparation et opposé au premier côté, les moyens de guidage de la bande le long du chemin de convoyage et le rouleau de séparation étant configurés de sorte à permettre ensemble, un décollement de l'électrode de la première face au moins de la bande au passage de l'électrode au niveau du renvoi d'angle du rouleau de séparation.

Il est entendu par « composant de batterie » un ensemble comprenant un séparateur en forme de bande et d'au moins une électrode en feuille. Ce composant peut prendre différentes formes en fonction de la géométrie de la batterie. Par exemple, le composant de batterie peut être un enroulement cylindrique d'un empilement de séparateur et électrodes destiné à équiper une cellule de géométrie cylindrique. Un même enroulement peut être également à plat pour équiper une cellule de géométrie prismatique. Un autre mode de réalisation particulier de composant de batterie est du type comprenant un empilage successif d'un séparateur en forme de bande pliée en zigzag d'une électrode en feuille, soit du type « empilement en Z » (soit en termes anglosaxons « Z-stacking »).

Grâce à une telle combinaison de caractéristiques, la ou les électrodes de la première face au moins sont séparées de la bande sans être endommagées, ni même endommager la bande, au passage du rouleau de séparation. Cela permet de pouvoir mieux recycler les matériaux.

Selon un mode de réalisation, que le rouleau de séparation présente un rayon de courbure prédéterminé configuré pour assurer, avec les moyens de guidage, le décollement de l'électrode de la première face de la bande. Une telle caractéristique permet d'améliorer encore l'efficacité de la séparation de l'électrode du séparateur.

Selon un mode de réalisation, que le rayon de courbure du rouleau de séparation est supérieur ou égal à 1 mm, de préférence supérieur ou égal à 5 mm et/ou inférieur ou égal à 25 mm, de préférence inférieur ou égal à 15 mm.

Selon un mode de réalisation, un axe de rotation du rouleau de séparation et du rouleau d'entraînement et de stockage sont parallèles deux à deux, de préférence encore parallèle à un plan horizontal. Cela aide à maintenir la bande tendue et diminue le risque de détérioration des composants lors de leur séparation. Une telle configuration limite également les frottements, et donc les pertes de charges, facilitant ainsi la circulation de la bande le long de son chemin de convoyage depuis la zone d'approvisionnement jusqu'au rouleau d'entrainement et de stockage

Selon un mode de réalisation, le rouleau de séparation est positionné à un niveau verticalement au-dessus de la zone d'approvisionnement, le rouleau de séparation étant positionné de préférence de sorte qu'une projection verticale dudit rouleau de séparation est déportée latéralement d'un empilement du composant de batterie qui serait logé dans la zone d'approvisionnement.

Selon un mode de réalisation, l'équipement comprend un dispositif de mesure et/ou de contrôle de la tension de la bande. Le fait de conserver une tension optimale de la bande permet d'améliorer la qualité à la fois de la séparation et d'un contrôle du séparateur en vue de sa qualification aux fins de recyclage.

Selon un mode de réalisation, le dispositif de contrôle de la tension de la bande comprend des moyens de liaison réglables entre une armature de l'équipement et l'un au moins des rouleaux, de préférence au moins le rouleau de séparation, pour permettre un réglage de la tension de la bande.

Selon un mode de réalisation, l'équipement comprend des moyens de commande configurés pour piloter les moyens motorisés du rouleau d'entraînement et de stockage, de préférence en fonction de paramètres extérieurs. Les paramètres extérieurs comprennent par exemple les données de tension de la bande fournies par le dispositif de mesure de tension. Ces données permettent d'adapter le pilotage des moyens motorisés du rouleau d'entrainement et de stockage afin de maintenir une tension prédéterminée appliquée à la bande, mais également, de préférence de façon complémentaire d'interrompre le convoyage de la bande si la tension de la bande est supérieure à une valeur seuil prédéterminée, ceci pour limiter tout risque de détérioration de l'équipement.

Selon un mode de réalisation, le rouleau de séparation est associé à au moins un rouleau complémentaire disposé à une distance prédéterminée du rouleau de séparation, le rouleau complémentaire étant disposé de préférence verticalement en-dessous du rouleau de séparation. Un tel rouleau complémentaire permet notamment de garantir une certaine tension à la bande en lui opposant une résistance, ainsi que maintenir relativement constant un angle d'arrivée de la bande au contact du rouleau de séparation.

Selon un mode de réalisation, l'équipement est configuré de sorte que l'espace, ou la distance, entre le rouleau de séparation et le rouleau complémentaire est:
- supérieur ou égal à une épaisseur du séparateur, c'est-à-dire l'épaisseur de la bande prise au niveau d'une zone du séparateur exempte d'électrode ; et/ou
- inférieur ou égal à une épaisseur correspondant à la somme de l'épaisseur du séparateur et d'une épaisseur d'une électrode.

En d'autres termes, la distance séparant les deux rouleaux est comprise entre une valeur d'épaisseur du séparateur pris nu et une épaisseur de séparateur avec une seule électrode, ceci permettant d'assurer le passage de la bande sans endommager le séparateur et sans nuire au bon décollement de l'électrode associée.

Selon un mode de réalisation, la zone d'approvisionnement comporte un support destiné à supporter une partie empilée du composant de batterie, le support étant de préférence plan et comportant des moyens de calage de ladite partie empilée du composant de batterie pour maintenir sa position sur le support.

Selon un mode de réalisation, les moyens de guidage de la bande le long du chemin de convoyage comportent une pluralité de rouleaux de guidage distincts du rouleau de séparation disposés de préférence successivement en aval du rouleau de séparation par rapport au chemin de convoyage.

Selon un mode de réalisation, les rouleaux de guidage comprennent un rouleau de guidage amont et un rouleau de guidage aval entre lesquels peut être tendue une portion de bande à contrôler située dans une zone de contrôle, l'équipement étant configuré de préférence de sorte que les rouleaux de guidage amont et aval sont sensiblement alignés suivant un axe vertical de sorte que la portion de bande à contrôler est tendue verticalement, un axe de rotation du rouleau de séparation et les axes de rotations associés aux rouleau de guidage amont et aval étant de préférence encore parallèles deux à deux, de préférence encore parallèle à un plan horizontal.

Selon un mode de réalisation, l'équipement comprend des moyens de contrôle configurés pour acquérir des données de la portion à contrôler de la bande, de préférence de la première face de la bande au niveau de la portion à contrôler. Ces moyens de contrôles, aménagés dans le volume utile de l'équipement, sont aptes à inspecter l'état de la bande à mesure qu'elle convoie le long du chemin de convoyage sans impacter le temps du processus de séparation des électrodes de la bande du séparateur. Ce contrôle permet d'inspecter la qualité du séparateur après le retrait des électrodes en vue de sa qualification aux fins de recyclage et peut ainsi être mis en oeuvre en temps masqué dans le procédé global de recyclage.

Selon un mode de réalisation, les moyens de contrôle comprennent au moins un capteur, de préférence un capteur optique tel qu'une caméra, disposé de sorte à être positionné en regard de la portion de contrôle de la bande, le capteur étant de préférence solidaire d'une armature de l'équipement.

Selon un mode de réalisation, le capteur présente un champ d'acquisition de sorte qu'une image acquise est intégralement portée par la portion de bande à contrôler. Le capteur étant positionné dans la zone de contrôle, l'image acquise est aussi telle que l'axe reliant son centre au centre du capteur optique est perpendiculaire à la portion contrôlée de la bande.

Selon un mode de réalisation, les moyens de guidage comportent un second rouleau de séparation distinct du rouleau de séparation formant un premier rouleau de séparation, l'équipement étant configuré pour que le second rouleau de séparation forme un second renvoi d'angle de la bande le long du chemin de convoyage de sorte qu'une portion aval de la bande en aval du second rouleau de séparation par rapport au chemin de convoyage présente un angle de séparation non nul avec une portion amont de la bande en amont du second rouleau de séparation, les moyens de guidage de la bande le long du chemin de convoyage et le second rouleau de séparation étant configurés de sorte à permettre ensemble, un décollement d'une électrode de la seconde face de la bande au passage de cette électrode au niveau du second renvoi d'angle du second rouleau de séparation.

Selon un mode de réalisation, le second rouleau de séparation et le rouleau de guidage amont forment un seul et même rouleau. Un tel rouleau unique mettant en oeuvre ces deux fonctionnalités de séparation et de guidage permet de séparer les éventuelles électrodes, par exemple les cathodes, non encore séparées du séparateur après leur passage au niveau du premier rouleau de séparation et restées jusqu'alors solidaires de la bande du séparateur.

Selon un mode de réalisation, un axe de rotation du second rouleau de séparation et du premier rouleau de séparation sont parallèles deux à deux, de préférence encore parallèle à un plan horizontal.

Selon un autre aspect de l'invention, celle-ci a trait à un ensemble d'un équipement pour la séparation d'au moins une électrode d'un séparateur d'un composant de batterie tel que décrit ci-avant et dudit composant de batterie du type comprenant un séparateur en forme de bande et d'au moins une électrode en feuille.

Selon un autre aspect, l'invention concerne également un procédé de séparation d'au moins une électrode d'un séparateur d'un composant de batterie du type comprenant un séparateur en forme de bande et d'au moins une électrode en feuille, caractérisé en ce qu'il est mis en oeuvre par un équipement tel que décrit ci-avant.

Selon un mode de réalisation, le procédé de séparation comprend une étape de contrôle de la bande par des moyens de contrôle configurés pour acquérir des données d'une portion à contrôler de la bande, de préférence de la première face de la bande au niveau de la portion à contrôler.

### BRÈVE DESCRIPTION DES FIGURES

D'autres caractéristiques et avantages de l'invention ressortiront à la lecture de la description qui suit, en référence aux figures annexées, qui illustrent :
- [Fig. 1] : un schéma en perspective isométrique d'un équipement pour la séparation d'électrodes d'un séparateur d'un composant de batterie ;
- [Fig. 2] : un schéma en perspective isométrique de l'équipement de la figure 1, dans lequel est placé un séparateur sous forme de bande suivant un chemin de convoyage depuis une zone d'approvisionnement jusqu'à un rouleau d'entrainement et de stockage en étant guidée par des moyens de guidage de ladite bande ;
- [Fig. 3] : une vue schématique d'une étape de fonctionnement de l'équipement où une première électrode sur une première face de la bande suivant un chemin de convoyage est située directement en amont d'un rouleau de séparation ;
- [Fig. 4] : une vue schématique d'une étape de fonctionnement de l'équipement où, d'une part, la première électrode sur la première face de la bande est séparée du séparateur et, d'autre part une seconde électrode sur une seconde face de la bande suivant le chemin de convoyage est située directement en amont du rouleau de séparation ;
- [Fig. 5] : une vue schématique d'une étape de fonctionnement de l'équipement où la seconde électrode sur la seconde face de la bande passe au niveau du rouleau de séparation.
- [Fig. 6] : une vue schématique d'une étape de fonctionnement de l'équipement où une troisième électrode sur la première face passe au niveau du rouleau de séparation tandis que la seconde électrode se sépare de la seconde face de la bande en aval du rouleau de séparation par rapport au chemin de convoyage ;
- [Fig. 7] : une vue schématique d'une étape de fonctionnement de l'équipement où la troisième électrode est séparée de la bande.

Pour plus de clarté, les éléments identiques ou similaires sont repérés par des signes de référence identiques sur l'ensemble des figures.

### DESCRIPTION DÉTAILLÉE D'UN MODE DE RÉALISATION

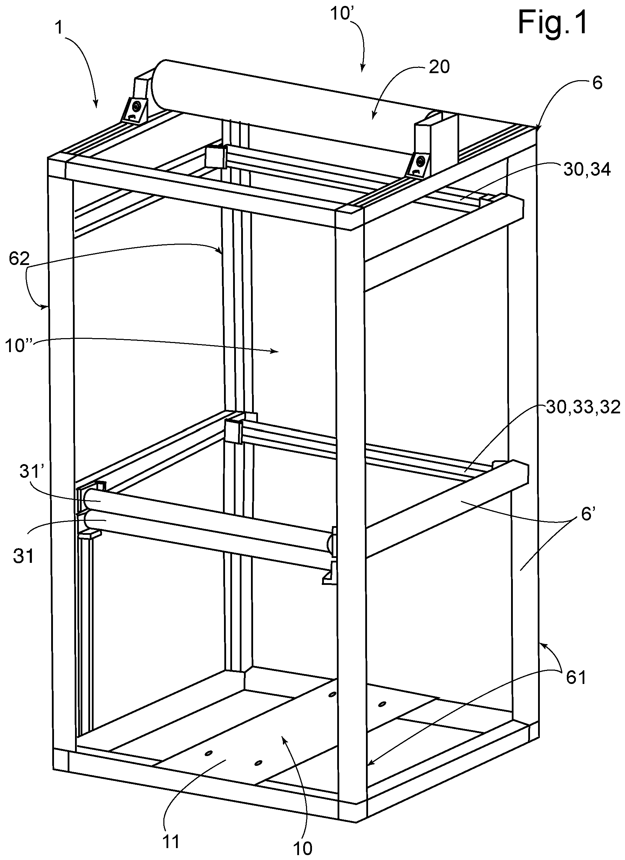

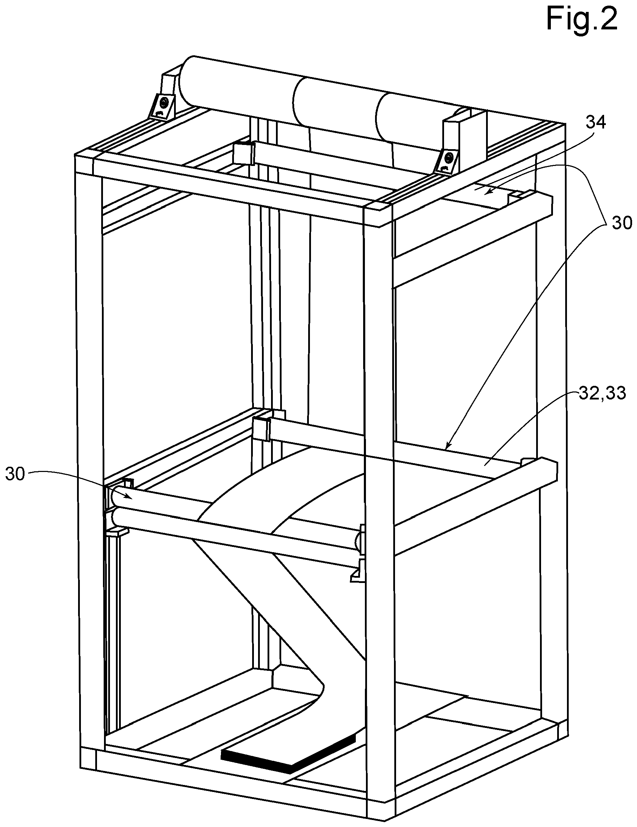

Les figures 1 et 2 illustrent un équipement **1** selon un mode de réalisation, pour la séparation des électrodes **2** d'une bande **5** d'un séparateur **3** d'un composant **4** de batterie, en particulier ici pour une cellule électrochimique d'une batterie de véhicule électrique. La figure 2 illustre plus précisément un ensemble **1'** d'un tel équipement **1** et du composant **4** de batterie de géométrie prismatique. En particulier dans cet exemple, le composant **4** de batterie est du type « empilement en Z », c'est-à-dire qu'il comprend un empilage successif d'un séparateur **3** en forme de bande pliée en zigzag et d'une électrode **2** en feuille.

Dans un tel « empilement en Z », des feuilles d'électrodes individuelles sont insérées sur un film séparateur plié. Lors de la fabrication d'un tel composant de batterie, une feuille d'électrode est d'abord placée sur le film séparateur. Ensuite, le séparateur est plié sur la feuille d'électrode, ce qui permet de placer une feuille de l'autre électrode sur le séparateur. Ce processus est répété plusieurs fois. On obtient un empilement alternant successivement une portion de séparateur, une cathode, une autre portion de séparateur, une anode, etc. et dont les portions de séparateur forment ensemble le séparateur sous forme de bande, lesdites portions de séparateur étant séparées successivement entre elles par des plis.

La forme du séparateur **3** est ici adaptée à des batteries dites « prismatiques ». En effet, le séparateur **3** a été formé selon la technique dite du « pliage en Z » ou « empilement en Z ». Dans une telle configuration des portions de séparation formant localement séparateur entre deux électrodes sont empilées uniformément en zigzag. Lesdites portions de séparation sont reliées successivement de façon continue les unes aux autres de sorte à former une bande unique, laquelle est pliée en zigzag dans le composant **4** de batterie. Le composant **4** de batterie est ainsi du type comprenant un empilage successif d'un séparateur en forme de bande pliée en zigzag et d'une électrode **2** en feuille.

L'équipement **1** a pour fonction de permettre la séparation des électrodes **2,** du séparateur **3** afin de pouvoir assurer au mieux son recyclage.

L'équipement **1** comporte une armature **6,** qui peut être réalisée en tout matériau(x) approprié(s), par exemple en métal ou métaux, plastique(s), ou autre. Cette armature **6** définit la structure de l'équipement. Ladite armature **6** comprend notamment une pluralité de traverses **6'** reliées les unes aux autres. De préférence, pour améliorer la tenue structurelle de l'armature **6** tout en minimisant la quantité de matière et le poids de l'équipement, tout ou partie des traverses **6'** présentent une structure tubulaire, c'est-à-dire creuses.

L'armature **6** délimite un volume utile qui contient l'ensemble des éléments de l'équipement **1.** Ce volume utile, constant, est utile pour se référer en particulier à un encombrement caractéristique de l'équipement **1** qui présente ainsi des dimensions limites pour être inséré dans un espace prédéterminé à volume restreint. Il n'est pas exclu que des éléments annexes, tel un câble d'alimentation ou des moyens de contrôles à distance par exemple, soient partiellement ou entièrement situés hors du volume de contention.

L'armature **6** présente une forme globalement parallélépipédique s'étendant verticalement. L'armature **6** permet de supporter et maintenir fixement des rouleaux entre deux structures latérales ou cadres latéraux **61, 62** de l'armature **6.** Ces rouleaux forment des moyens de guidage de la bande du séparateur **3** le long d'un chemin de convoyage **W** de ladite bande **5** entre, et depuis, une zone d'approvisionnement **10** et jusqu'à un rouleau d'entrainement et de stockage **20** de ladite bande **5.**

La zone d'approvisionnement **10** est configurée pour pouvoir y loger le composant **4** de batterie, à savoir ici un empilement organisé d'ensembles composés d'une électrode positive, du séparateur et d'une électrode négative, alternativement en couches, le séparateur s'étendant en étant plié en zigzag. Un tel empilement est couramment appelé en jargon anglosaxon « stack » ou « stacking » d'électrodes pour des cellules Lithium Ion.

La zone d'approvisionnement **10** comporte en particulier une plaque formant support **11** sur laquelle peut être posée une partie empilée du composant de batterie. La plaque s'étend dans un plan parallèle à un plan de référence horizontal. L'équipement **1** peut comporter des moyens de maintien en position de l'empilement sur le support **11** (non illustrés) de sorte que durant l'utilisation de l'équipement, donc durant le désempilement de la bande **5,** le composant **4** de batterie reste bien en position. Par ailleurs, cela permet de conserver le contrôle de la tension de la bande **5.**

Les moyens de maintien en position de l'empilement sur le support **11** peuvent comprendre un ou des doigts élastiques flexibles et/ou une ou des pinces par exemple pour pincer la portion d'extrémité de la bande **5** sur le support **11.** Ces moyens de liaison au support **11** de la bande **5** permettent de tenir la portion d'extrémité de la bande **5** et assurer ainsi une tension prédéterminée de la bande **5,** en particulier en fin de désempilement de la bande 5, lorsqu'il ne reste que très peu de bande **5** dans la zone d'approvisionnement **10.**

Le rouleau d'entrainement et de stockage **20** comprend un rouleau configuré pour être relié à une portion d'extrémité de la bande **5.** Le rouleau d'entraînement et de stockage **20** comprend des moyens motorisés pour assurer, d'une part, une traction sur la bande **5** du composant **4** de batterie et, d'autre part, permettre le convoyage de la bande **5** suivant un chemin de convoyage **W** depuis la zone d'approvisionnement **10** jusqu'au dit rouleau d'entrainement et de stockage **20** en étant guidée le long du chemin de convoyage **W** par des moyens de guidage **30.** L'équipement **1** comprend des moyens de commande (non illustrés) configurés pour piloter les moyens motorisés du rouleau d'entraînement et de stockage **20.** Cette commande peut prendre en compte différents paramètres extérieurs tels que les données issues d'un dispositif de mesure de tension, etc. Ceci permet aux moyens de commande d'exploiter les données fournies par le dispositif de mesure et/ou de contrôle de la tension de la bande et de piloter les moyens motorisés du rouleau d'entraînement et de stockage **20** de telle sorte à ce que la bande **5** soit tendue avec une tension prédéterminée suffisante. Dans une telle configuration, le fait que la bande **5** soit justement tendue permet d'optimiser la séparation des électrodes **2, 2', 2"** de la bande **5** du séparateur **3** et de stocker cette bande **5** autour du rouleau **20** sans l'endommager.

L'armature **6** s'étend verticalement de la zone d'approvisionnement **10** placée à un niveau inférieur jusqu'à une zone de stockage **10'** située verticalement au-dessus de la zone d'approvisionnement **10** à un niveau supérieur dans laquelle est placée le rouleau d'entrainement et de stockage **20.** Le chemin de convoyage **W** traverse une zone de convoyage **10",** située verticalement au-dessus de la zone d'approvisionnement **10** et verticalement sous la zone de stockage **10'** dans laquelle la bande **5** est convoyée et où les électrodes sont séparées du séparateur **3.**

Est visible sur la figure 2 le composant **4** de batterie dont une partie empilée est placée sur le support **11,** dans la zone d'approvisionnement **10,** partie qui comporte une première portion d'extrémité de la bande **5** du séparateur **3.** Une seconde portion d'extrémité de la bande **5** du séparateur **3** est quant à elle fixée au rouleau d'entrainement et de stockage **20.** En pratique, une fois le composant **4** de batterie placée dans la zone d'approvisionnement **10** sur son support, un opérateur déploie la seconde portion d'extrémité de la bande **5** le long du chemin de convoyage **W** pour venir la fixer au rouleau d'entrainement et de stockage **20** par un moyen approprié, par exemple au moyen d'une bande adhésive.

Cette étape de déploiement de la seconde portion d'extrémité de la bande **5** est ici une étape manuelle. Toutefois, on peut prévoir d'automatiser cette étape avec des moyens de positionnement automatiques et adaptés pour mettre en oeuvre ces opérations de placement de composant **4** de batterie dans l'équipement **1.**

Pour assurer la qualification du séparateur une fois les électrodes séparées, l'équipement comprend des moyens de contrôle **70.** Les moyens de contrôle **70** sont configurés pour acquérir des données d'une portion à contrôler **57** de la bande **5.** Dans ce mode de réalisation, les moyens de contrôle **70** comprennent un capteur **71** optique tel qu'une caméra **72,** disposé de sorte à être positionné en regard de la portion à contrôler **57** de la bande **5.** Pour ce faire, le capteur **71** est solidaire de l'armature **6** de l'équipement **1.** Des moyens de réglage de la position de la caméra **71** peuvent également équiper l'équipement **1.** La caméra **71** est logée dans la zone intermédiaire de convoyage **10"** au-dessus verticalement de la zone d'approvisionnement **10** et en-dessous verticalement la zone de stockage **10'.**

Ces moyens de contrôles **70,** aménagés dans le volume utile de l'armature **6,** sont aptes à inspecter en continu l'état de la bande **5** au fur et à mesure que ladite bande **5** convoie le long du chemin de convoyage **W,** ceci en temps masqué, c'est-à-dire sans impacter le temps du processus de séparation des électrodes **2** de la bande **5.** Dans ce mode de réalisation, la portion à contrôler **57** de la bande **5** est positionnée de sorte à être parallèle à un plan vertical, ceci afin de tirer profit des efforts gravitationnels appliqués sur ladite bande **5,** en particulier le séparateur **3** dans cette zone, pour assurer une tension « naturelle » sur la portion d'extrémité de la bande **5** en fin de désempilement de la bande **5.** C'est cette tension qui permet à la bande **5** d'être contrôlée par les moyens de contrôle **70** au niveau de la portion à contrôler **57.**

Comme évoqué précédemment, le convoyage de la bande **5** suivant le chemin de convoyage **W** depuis la zone d'approvisionnement **10** jusqu'au rouleau d'entrainement et de stockage **20** est assuré par un guidage de ladite bande **5** par des moyens de guidage **30** de ladite bande **5** placés le long dudit chemin de convoyage **W.**

Ces moyens de guidage **30** comportent une pluralité de rouleaux disposés à différents endroits, chaque rouleau formant localement un renvoi d'angle de la bande **5** de sorte à jalonner le chemin de convoyage **W** pour guider le convoyage de la bande **5** lors de l'utilisation de l'équipement **1.**

Des axes de rotation de chacun des rouleaux des moyens de guidage **30** sont parallèles deux à deux et parallèle au plan de référence horizontal. Une telle configuration limite les frottements, et donc les pertes de charges, facilitant ainsi la circulation de la bande **5** le long de son chemin de convoyage **W** depuis la zone d'approvisionnement **10** jusqu'au rouleau d'entrainement et de stockage **20.**

Dans ce mode de réalisation, les moyens de guidage **30** de l'équipement **1** comporte trois rouleaux parmi lesquels on distingue, distinctement et successivement dans le sens du chemin de convoyage **W** :
- un premier rouleau de guidage, formant un premier rouleau de séparation **31** ;
- un second rouleau de guidage, formant à la fois un second rouleau de séparation **32** et un rouleau de guidage amont **33** situé en amont d'une zone de contrôle de la bande **5** de la portion à contrôler **57** de la dite bande **5;**
- un troisième rouleau de guidage, formant un rouleau de guidage aval **34** situé en aval de la zone de contrôle de la bande **5** de la portion à contrôler **57** de la dite bande **5.**

Une fois le composant **4** de batterie positionné dans l'équipement **1** puis la bande **5** déployée jusqu'au rouleau d'entrainement et de stockage **20,** la bande **5** est positionnée de sorte à présenter une première face **51** d'un premier côté extérieur au rouleau de séparation **31** et une deuxième face **52** d'un deuxième côté, du côté du rouleau de séparation **31** et opposé au premier côté.

Ainsi, et conformément à l'invention, les moyens de guidage **30** de la bande **5** comprennent au moins un rouleau de séparation **31** dont l'une des fonctions principales est d'être configurée pour permettre le décollement des électrodes **2** lorsque la bande parcours le renvoi d'angle associé, guidé par ce rouleau de séparation **31.**

Le rouleau de séparation **31** forme ainsi un renvoi d'angle de la bande **5** le long du chemin de convoyage **W** de sorte qu'une portion aval **5B** de la bande **5** en aval du rouleau de séparation **31** par rapport au chemin de convoyage **W** présente un angle de séparation ***α*1** non nul avec une portion amont **5A** de la bande **5** en amont du rouleau de séparation **31.**

Les moyens de guidage **30** de la bande **5** le long du chemin de convoyage **W** et le rouleau de séparation **31** sont configurés de sorte à permettre ensemble, un décollement des électrodes **2** de la première face **51** au moins de la bande **5** au passage de ces électrodes **2** au niveau du renvoi d'angle du rouleau de séparation **31.**

Lors du processus d'empilage du composant **4** de batterie, les feuilles d'électrode **2** séparées sont empilées selon un cycle répétitif d'anode **2',** de séparateur **3,** de cathode, **2"** de séparateur **3,** etc. Dans le procédé de pliage en Z, les feuilles d'électrode **2** séparées sont introduites alternativement par la gauche et par la droite dans une poche de séparation. Il en résulte dans un état déplié du séparateur **3,** un séparateur **3** sous forme de bande **5** comportant d'un même côté les anodes **2'** et de l'autre côté les cathodes **2".**

Lors de l'utilisation de l'équipement **1,** la partie empilée et du composant **4** de batterie positionnée sur le support **11,** et plus généralement la bande **5,** est orientée de sorte que les électrodes situées sur la première face **51** de la bande **5** orientée du côté extérieur au rouleau de séparation **31** comprennent les anodes **2'.**

Dans une telle configurations les électrodes situées sur la deuxième face **52** de la bande **5** orientée du côté intérieur au rouleau de séparation **31** comprennent les cathodes **2".**

Plusieurs composantes interviennent dans le décollement des électrodes **2** de la première face **51** de la bande **5** au passage de ces électrodes **2** au niveau du renvoi d'angle du rouleau de séparation **31.**

Une composante concerne le diamètre ou rayon de courbure du rouleau de séparation **31.** En effet, le rouleau de séparation **31** présente un rayon de courbure prédéterminé configuré pour assurer, avec les moyens de guidage **30,** le décollement des électrodes **2,2'** de la première face **51** de la bande **5.** Le rayon de courbure du premier rouleau de séparation **31** est supérieur ou égal à 1 mm, de préférence supérieur ou égal à 5 mm et/ou inférieur ou égal à 25 mm, de préférence inférieur ou égal à 15 mm. Dans ce mode de réalisation spécifique, et à titre d'exemple, le rayon de courbure est égal à 12,5 mm.

Bien entendu, ce rayon de courbure pourra être choisi également en fonction de la nature des électrodes **2** à séparer, leur épaisseur, leur souplesse, la pégosité des électrodes et du séparateur, etc.

Au passage du renvoi d'angle la souplesse du séparateur **3** est supérieure à celle des électrodes **2** de sorte que les électrodes, au passage d'un renvoi d'angle auront tendance à se séparer du séparateur **3.** Toutefois, le rayon de courbure du rouleau de séparation **31** :
- ne doit pas être trop faible, au risque de dégrader les électrodes **2, 2'** et/ou le séparateur **3,** nuisant à la qualité du recyclage extérieur ;
- ne doit pas être trop important, au risque que l'électrode **2, 2'** suive la courbure du chemin de guidage **W** et reste solidaire du séparateur **3,** sans obtenir de séparation de l'électrode **2, 2'** associée.

Une autre composante concerne la position du rouleau de séparation **31** par rapport à la zone d'approvisionnement **10,** et en particulier par rapport à l'empilement du composant **4** de batterie avec le séparateur **3** plié en Z. En d'autres termes, cette composante concerne l'orientation de la portion amont **5A** de la bande **5** en amont du rouleau de séparation **31** et de l'angle de séparation ***α*1** entre la portion aval **5B** de la bande **5** en aval du rouleau de séparation **31** par rapport au chemin de convoyage **W** et la portion amont **5A** de la bande **5** en amont du rouleau de séparation **31** par rapport au chemin de convoyage **W.**

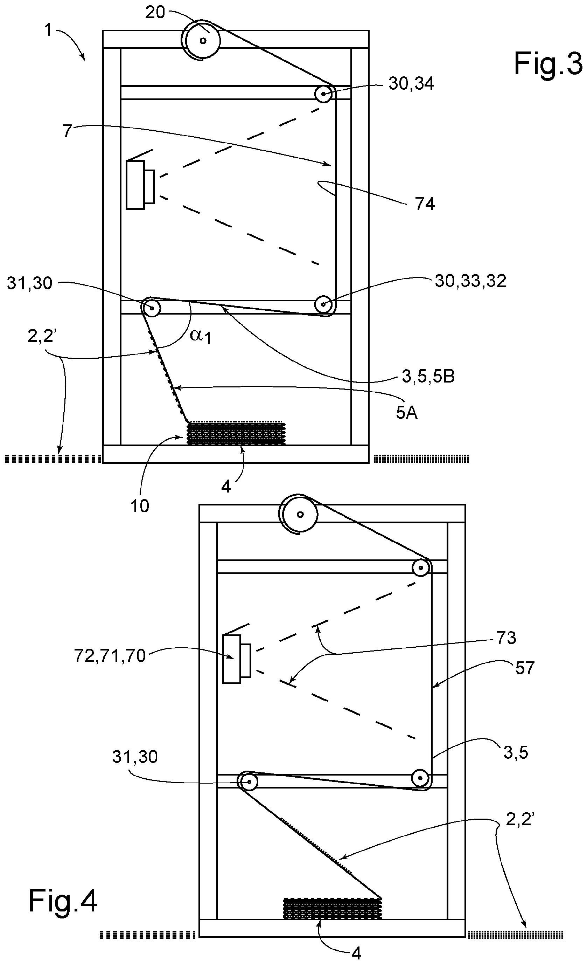

On positionne de préférence, comme illustré sur les figures 3 à 7, le rouleau de séparation **31** à un niveau verticalement au-dessus de la zone d'approvisionnement **10,** le rouleau séparateur **31** étant positionné de sorte qu'une projection verticale dudit rouleau de séparation **31** est déportée latéralement de l'empilement du composant **4** de batterie qui serait logé dans la zone d'approvisionnement **10.** De cette manière, le rouleau de séparation **31** n'est pas situé directement au-dessus de l'empilement du composant **4** de batterie dont le séparateur **3** se déplie. De même dans ce mode de réalisation, on positionne les moyens de guidage de sorte à ce que l'angle de séparation ***α*1** soit inférieur ou égal, de préférence strictement inférieur, à 90°. Dans une telle configuration la portion amont **5A** de la bande **5** en amont du rouleau de séparation **31** est orientée de sorte à ce que la première face **51** de la bande **5,** située du premier côté extérieur au rouleau de séparation **31,** présente une composante verticale non nulle et soit en partie en regard d'un plan horizontal coplanaire avec un plan du support **11.** De cette manière, la gravité appliquée aux électrodes **2** solidaires de la bande **5** situées sur la première face **51** et au niveau de cette portion amont **5A** travaille d'une manière à favoriser, voire initier, la séparation desdites électrodes **2.** De cette manière, les électrodes associés sont solidaires du séparateur **3** et suspendues, de sorte que le poids de l'électrode **2** exerce une action contraire à la force de liaison de l'électrode au séparateur **3** tendant à les maintenir solidaires.

Pour limiter toute perte de charge dans le convoyage de la bande **5,** un axe de rotation du rouleau de séparation **31** et du rouleau d'entraînement et de stockage **20** sont parallèles deux à deux, en particulier ici parallèle à un plan horizontal de sorte à favoriser l'action des forces gravitationnelles.

Il a été constaté qu'une tension trop faible de la bande **5** lors du convoyage peut avoir une action négative sur la qualité de la séparation des électrodes **2** du séparateur **3.** Pour pallier cette problématique, l'équipement **1** est muni d'un dispositif de mesure et/ou de contrôle de la tension de la bande **5,** le dispositif de contrôle de la tension de la bande **5** comprenant des moyens de liaison réglables entre l'armature **6** de l'équipement **1** et l'un au moins des rouleaux **31, 32, 33, 34** des moyens de guidage **30** ou du rouleau d'entraînement et de stockage **20,** ceci pour permettre un réglage de la tension de la bande **5.**

Les moyens de liaison réglables peuvent être réglés manuellement et/ou mécaniquement de façon automatisée au moment de l'initiation du processus, ou pendant le procédé de séparation lorsque le rouleau d'entrainement et de stockage **20** est commandé en rotation, ceci de manière active (automatisée et commandés par des moyens de commande) ou autonome passive, par exemple par le biais de liaisons élastiques permettant de créer une force de rappel perpendiculaire à l'axe de rotation des différents moyens de guidage **30,** force de rappel s'exerçant depuis l'axe de rotation vers la surface de contact entre le moyen de guidage **30** et la bande **5,** générant une tension conditionnelle sur la bande **5.**

Les moyens de de liaison réglables peuvent également être associés aux moyens de calage ou de maintien en position de l'empilement du composant **4** de batterie dont le séparateur **3** se déplie sur le support **11.**

Une configuration possible pour mieux maîtriser la tension de la bande **5** depuis le support **11** est d'associer le rouleau de séparation **31** à au moins un rouleau complémentaire **31'.** Dans ce cas, le rouleau complémentaire **31'** est disposé de préférence de sorte qu'un espace entre le rouleau de séparation **31** et le rouleau complémentaire **31'** est inférieur ou égal à une épaisseur de la bande **5.** Dans le mode de réalisation des figures 1 et 2, le rouleau complémentaire **31'** est disposé verticalement au-dessous du rouleau de séparation **31.**

Alternativement ou en complément, l'équipement peut comporter deux rouleaux complémentaires **31'** disposés à une distance prédéterminée du rouleau de séparation **31,** à un niveau verticalement en dessous de ce dernier, et agencés de telle sorte que les rouleaux complémentaires **31'** délimitent une bouche de cheminement à l'intérieure de laquelle chemine la bande **5.** Au passage entre ces deux rouleaux complémentaires **31'** le long du chemin de convoyage **W,** entre la zone d'approvisionnement **10** et le rouleau de séparation **31** par rapport au chemin de convoyage **W.** La tension de la bande peut être assurée par cette paire de rouleaux complémentaires **31'** en opposant à la bande **5** une certaine résistance lors de son convoyage. Par ailleurs, ladite paire de rouleaux complémentaires **31'** est positionnée de sorte à garantir un angle d'arrivée prédéterminé à la portion de la bande arrivant au contact du rouleau de séparation **31.**

Les moyens de guidage **30** comportent un second rouleau de séparation **32** distinct du rouleau de séparation **31** formant un premier rouleau de séparation **31.** De la même manière que pour le premier rouleau de séparation **31,** l'équipement **1** est configuré pour que le second rouleau de séparation **32** forme un second renvoi d'angle de la bande **5** le long du chemin de convoyage **W** de sorte qu'une portion aval **5D** de la bande **5** en aval du second rouleau de séparation **32** par rapport au chemin de convoyage **W** présente un angle de séparation ***α*2** non nul avec une portion amont **5C** de la bande **5** en amont du second rouleau de séparation **32.**

Le second rouleau de séparation **32** est placé directement en aval du premier rouleau de séparation **31** par rapport au chemin de convoyage **W,** aucun autre moyen de guidage **30,** ou en particulier rouleau de guidage, n'étant disposé entre ces deux rouleaux **31, 32.** Dans une telle configuration, la portion amont **5C** correspond ici à la portion aval **5B** de la bande **5** en aval du rouleau de séparation **31** par rapport au chemin de convoyage **W.** Dans ce mode de réalisation, on positionne les moyens de guidage de sorte à ce que l'angle de séparation ***α*2** soit inférieur ou égal, de préférence strictement inférieur, à 90°.

De la même façon que s'agissant du premier rouleau de séparation **31,** les moyens de guidage **30** de la bande **5** le long du chemin de convoyage **W** et le second rouleau de séparation **32** sont configurés de sorte à permettre ensemble, un décollement des électrodes **2** de la seconde face **52** de la bande au passage de ces électrodes **2** au niveau du second renvoi d'angle du second rouleau de séparation **32.**

Les électrodes **2** solidaires de la seconde face **52** sont ici les cathodes **2".** Les caractéristiques intrinsèques des anodes **2'** et des cathodes **2"** étant différentes (densité, épaisseur, souplesse, etc.) de sorte que les caractéristiques de l'équipement au niveau du premier rouleau de séparation **31** et du second rouleau de séparation **32** peuvent différer.

Le rayon de courbure du second rouleau de séparation **32** est supérieur ou égal à **1** mm, de préférence supérieur ou égal à 5 mm et/ou inférieur ou égal à **25** mm, de préférence inférieur ou égal à 15 mm. Dans ce mode de réalisation spécifique, et à titre d'exemple, le rayon de courbure du second rouleau de séparation **32** est égal à celui du premier rouleau de séparation **31.** Il peut être avantageux que le rayon de courbure du second rouleau de séparation **32** soit égal à celui du premier rouleau de séparation **31** afin de garder les mêmes caractéristiques de renvoi d'angle, et ainsi séparer une cathode **2"** de la bande **5** du séparateur **3** à l'aide du second rouleau de séparation **32** si celle-ci n'a pu être séparée de la bande **5** du séparateur **3** par le premier rouleau de séparation **31.**

De la même manière, les axes de rotation du second rouleau de séparation **32** et du premier rouleau de séparation **31** sont disposés de sorte à être horizontaux, parallèles deux à deux et situés à un même niveau verticalement de sorte à être coplanaires.

Le second rouleau de séparation **32** forme également un rouleau de guidage amont **33** situé en amont d'une zone de contrôle de la bande **5** de la portion à contrôler **57** de ladite bande **5.** Les moyens de guidage **30** comprennent également un rouleau de guidage aval **34** située directement en aval du rouleau de guidage amont **33** ou second rouleau de séparation **32** et entre lesquels peut être tendue une portion de bande à contrôler **57.** Les rouleaux de guidage amont et aval **33, 34** sont sensiblement alignés suivant un axe vertical de sorte que la portion de bande à contrôler **57** est tendue verticalement et forme une zone de prise d'image pour des moyens de contrôle **70** tels que des moyens de contrôle optiques. Les axes de rotation des rouleaux de guidage amont et aval **33, 34** sont disposés de sorte à être horizontaux et parallèles deux à deux.

Les moyens de contrôle **70** sont configurés pour acquérir des données de la portion à contrôler **57** de la bande **5,** est comprennent au moins un capteur **71** optique tel qu'une caméra **72.** La caméra **72** est montée solidairement de l'armature **6** et est orientée de sorte à être placée frontalement avec la première face **51** de la bande **5** au niveau de la portion à contrôler **57** formant support des images acquises par la caméra.

Situé à l'extrémité avale des moyens de guidage **30** par rapport au chemin de convoyage **W,** le rouleau d'entrainement et de stockage **20** permet de faire convoyer, par ses moyens motorisés, la bande **5,** afin que celles-ci suivent le chemin de convoyage **W,** en enroulant le bande **5** du séparateur **3** autour de lui.

L'axe de rotation du rouleau d'entrainement et de stockage **20** est disposé de sorte à être placé à un niveau verticalement au-dessus du niveau de l'axe de rotation du rouleau de guidage aval **34** et déporté horizontalement dudit rouleau de guidage aval **34** de sorte qu'ils ne sont pas superposés verticalement.

Les dimensions de l'armature dépendent de plusieurs paramètres. La largeur de l'armature, correspondant notamment à la longueur des rouleaux, cette distance étant celle mesurée globalement entre les structures latérales ou cadres latéraux **61, 62** de l'armature **6.** La largeur des rouleaux est configurée de sorte à être strictement supérieure à la largeur de la bande **5** à convoyer.

Une profondeur, prise horizontalement, de l'armature **6** est conditionnée principalement par la profondeur de champ de la caméra **72.** On cherche en effet à avoir une profondeur de champs pour que la caméra **72** présente une ouverture suffisante pour prendre une électrode complète, en particulier lorsqu'il s'agit de photos ou clichés.

Dans ce même sens de la profondeur, la distance entre les axes de rotation du second rouleau de séparation **32** et du premier rouleau de séparation **31** est choisie de sorte à être supérieure à une longueur d'une électrode prise dans le sens du chemin de convoyage **W.**

De même, la hauteur séparant les axes de rotation des rouleaux de guidage amont et aval **33, 34** est choisie de sorte à être supérieure ou égale à longueur d'une électrode prise dans le sens du chemin de convoyage **W.**

Enfin la composante horizontale de la distance entre l'axe de rotation du rouleau d'entrainement et de stockage **20** et l'axe de rotation du rouleau de guidage aval **34** est déterminée de sorte à être supérieure ou égale à la moitié de la distance séparant les premier et second rouleaux de séparation **31, 32.** Il a été constaté qu'une telle distance a en effet bénéfique sur le maintien en tension de la bande **5** en convoyage lors de l'utilisation de l'équipement.

Le procédé de séparation des électrode **2, 2', 2"** du séparateur **3** en forme de bande **5** mis en oeuvre par l'équipement **1** sera mieux compris à la lecture de la description qui suit en relation avec les figures 3 à 7 qui illustrent différentes étapes de ce procédé.

Selon ce mode de réalisation, l'équipement **1** comprend, de façon similaire au mode de réalisation des figures 1 et 2, trois rouleaux parmi les moyens de guidage **30,** dont un rouleau séparateur **31** au niveau du premier rouleau séparateur **31** et deux rouleaux de guidages amont et aval **33, 34,** le rouleau de guidage amont **33** formant également le second rouleau séparateur **32.**

Dans une étape d'initialisation du procédé, la bande **5** est préalablement étirée manuellement le long du chemin de convoyage **W** et fixée au rouleau d'entrainement et de stockage **20.** Cette fixation peut être réalisée au moyen souhaité, à l'aide d'un bout de ruban adhésif par exemple.

Quand l'équipement **1** fonctionne, le rouleau d'entrainement et de stockage **20** est actionné en rotation par les moyens motorisés (non illustrés) de sorte à garantir l'enroulement de la bande **5** autour dudit rouleau d'entrainement et de stockage **20.** Cette action d'enroulement assure une traction sur la bande **5** permettant le convoyage de la bande **5** le long du chemin de convoyage **W.**

La figure 3 illustre une étape du procédé dans laquelle une première électrode **2,** ici une anode **2',** disposée sur la première face **51** du premier côté de la bande **5** est placée en amont du premier rouleau séparateur **31** par rapport au chemin de convoyage **W.** La bande **5** est tendue tout le long du chemin de convoyage **W** et une portion avale **5B** de la bande **5** en aval du premier rouleau de séparation **31** par rapport au chemin de convoyage **W** forme un angle de séparation ***α*1** non nul avec une portion amont **5A** de la bande **5** en amont du rouleau de séparation **31.**

L'équipement **1,** notamment le premier rouleau de séparation **31,** est configuré de sorte à séparer les électrodes **2,** en particulier au moins les anodes **2',** de la première face **51** de la bande **5** lorsque lesdites anodes **2'** circulent au niveau du premier rouleau de séparation **31** et au passage du renvoi d'angle associé. Pour faciliter cette séparation, le rayon de courbure est configuré de sorte à être supérieur ou égal à 1 mm et de préférence inférieur ou égal à 25. Cette caractéristique peut être optimisée pour séparer en outre tout ou partie des électrodes **2** situées sur la seconde face **52** du second côté de la bande **5,** à savoir ici les cathodes **2",** en lui conférant un rayon de courbure supérieur ou égal à 5 mm et inférieur ou égal à 15 mm.

Le premier rouleau de séparation **31** présente un axe de rotation parallèle à un axe de rotation du rouleau d'entrainement et de stockage **20.** Ces axes sont aussi parallèles au plan de référence horizontal.

La figure 4 illustre une étape du procédé postérieure à la situation de la figure 3 dans laquelle la première électrode formant anode **2',** a été séparée du séparateur **3** déployé sous forme de bande **5** et est tombée dans un bac de dépôt des anodes **2'.** La seconde électrode **2,** ici une cathode **2",** située sur la seconde face **52** du second côté de la bande **5** est quant à elle située directement en amont du premier rouleau de séparation **31** et est en passe de transiter par ce premier rouleau de séparation **31,** ce qui lui permettra éventuellement de se décoller au sortir du premier renvoi d'angle.

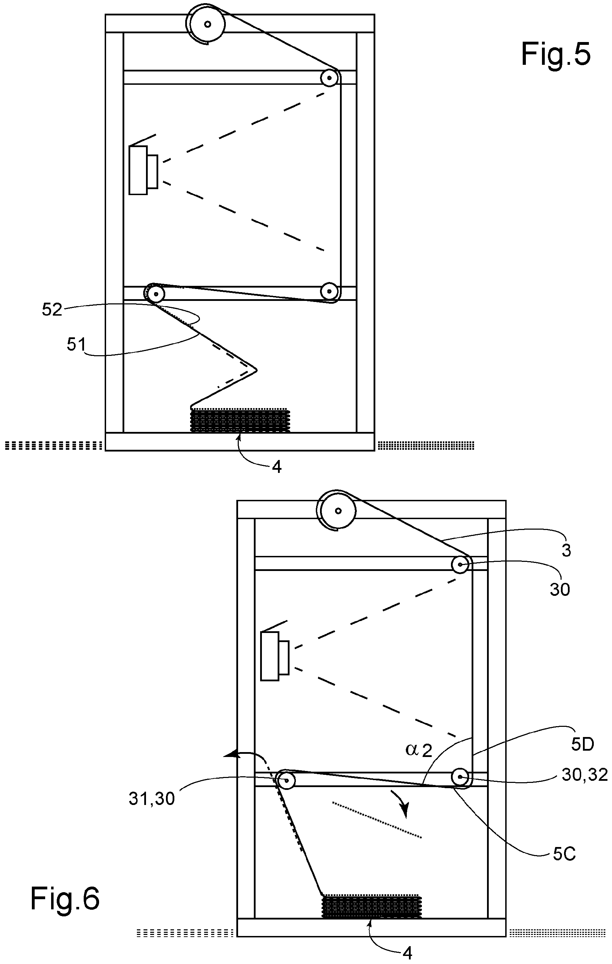

La figure 5 illustre une étape du procédé postérieure à la situation de la figure 4 dans laquelle lla seconde électrode **2, 2"** de la seconde face **52** du second côté de la bande **5** est convoyée au niveau du premier rouleau de séparation **31,** cette seconde électrode **2, 2"** étant interposée entre le séparateur **3** et le premier rouleau de séparation **31".**

La figure 5 illustre également le mouvement de déroulement de la bande **5** au niveau de la zone d'approvisionnement **10.** En effet, le composant de batterie évolue d'une partie empilée dudit composant **4** de batterie positionnée sur le support **11** à une bande déployée et tendue le long du chemin de convoyage **W.** La traction continue induite par l'action du rouleau d'entrainement et de stockage **20** motorisé lorsqu'il est mis en rotation permet de déplier le séparateur **3** initialement dans un état plié en zigzag pour suivre le chemin de convoyage **W** en étant guidé par les moyens de guidage **30.** Ce dépliage dynamique a pour conséquence de faire varier l'orientation de la portion de bande **5** en amont du premier rouleau de séparation **31** par rapport chemin de convoyage **W.** Cette variation d'orientation implique une variation de l'angle de séparation ***α*1** entre la portion aval **5B** de la bande **5** en aval du rouleau de séparation **31** par rapport au chemin de convoyage **W** et la portion amont **5A** de la bande **5** en amont du rouleau de séparation **31,** l'angle de séparation ***α*1** évoluant entre deux bordes minimale et maximale, chacune étant telle que l'angle de séparation ***α*1** est non nul.

La figure 6 illustre une étape du procédé postérieure à la situation de la figure 5 dans laquelle la seconde électrode **2, 2"** s'est séparée de la seconde face **52** du second côté de la bande **5** du séparateur **3** et la troisième électrode **2, 2',** ici anode **2',** solidaire de la première face **51** du premier côté de la bande **5** est en cours de séparation et située au niveau du premier rouleau de séparation **31.**

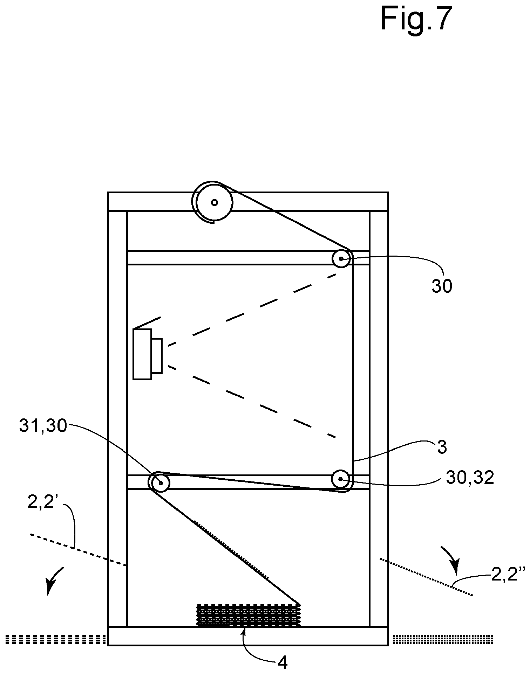

La figure 7 illustre une étape du procédé postérieure à la situation de la figure 6 dans laquelle la troisième électrode **2, 2'** s'est complètement séparée de la bande **5** du séparateur **3** et tombe dans un bac de dépôt prévu à cet effet (non illustré).

Si la cathode **2"** n'est pas décollée sur cette portion aval **5B** après son passage au niveau du premier rouleau de séparation **31,** le rouleau de guidage amont **33** qui forme aussi un second rouleau de séparation **32** est configuré pour permettre de séparer ou achever la séparation de cette cathode **2"** au passage dudit rouleau de séparation **32** grâce à un angle de séparation ***α*2** non nul entre :
- la portion amont **5C** de la bande **5** en amont du second rouleau de séparation **32** correspondant à la portion aval **5B** de la bande **5** en aval du rouleau de séparation **31** par rapport au chemin de convoyage **W ;** et
- la portion aval **5D** de la bande **5** en aval du second rouleau de séparation **32** par rapport au chemin de convoyage **W.**

Tout le long du processus de séparation des électrodes **2, 2', 2"** de la bande **5** du séparateur **3** illustré par les figures 3 à 7, un contrôle de qualité est effectué afin de vérifier si toutes les électrodes **2, 2', 2"** ont entièrement été retirées, et ce sans endommager la bande **5** du séparateur **3.**

Pour ce faire, le procédé comprend une étape de contrôle de la bande par des moyens de contrôle **70** configurés pour acquérir des données d'une portion à contrôler **57** de la bande **5.**

Ce contrôle est ainsi réalisé par les moyens de contrôle **70** au niveau de la zone de contrôle **75** située entre les rouleaux de guidage amont **33** et aval **34,** dans laquelle transite la bande **5** et présente. Cette zone de contrôle contient ainsi la portion **57** de la bande **5** à contrôler. Les moyens de contrôle **70** sont disposés de sorte que la portion **57** de la bande **5** à contrôler est ici portée par la première face **51** du premier côté de la bande **5.**

Selon une variante, ces moyens de contrôles **70** comprennent au moins un capteur **71,** de préférence de nature optique telle qu'une caméra **72.** Bien entendu, plusieurs caméras peuvent être prévues.

Le capteur **71** des moyens de contrôle **70** présente un champ d'acquisition **73** permettant de contrôler un plan d'acquisition **74** qui peut être intégralement porté par la portion de bande à contrôler **57** circulant entre les rouleaux de guidage amont **33** et aval **34.** Les moyens de contrôle **70** comprennent également une unité de traitement (non illustrée), telle un ordinateur, qui serait connectée au capteur **71.**

Sur les figures 3 à 7, le contrôle se fait par le biais de moyens de contrôle **70** composés d'au moins une caméra **72.** Celle-ci est liée à l'armature **6** de l'équipement **1** afin de minimiser les mouvements désolidarisés des différents composants de l'équipement **1** et donc de réduire le bruit lors de la captation durant le contrôle.

Bien entendu les moyens de contrôles **70** comprennent ici au moins une caméra **72** configurée pour mettre en oeuvre une étape d'acquisition de données sous forme d'une vidéo de l'ensemble de la bande. En complément ou en alternative, les moyens de contrôles **70** peuvent comporter des moyens photographiques configurés pour mettre en oeuvre une étape d'acquisition de données sous forme d'images de portion **57** de la bande **5** à contrôler capturées à intervalle de temps régulier.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Par exemple, le nombre de rouleaux composant les moyens de guidage **30** peuvent varier.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Équipement (1) pour la séparation d'au moins une électrode (2, 2', 2") d'un séparateur (3) d'un composant (4) de batterie du type comprenant un séparateur (3) en forme de bande (5) et d'au moins une électrode (2, 2', 2") en feuille, l'équipement (1) étant **caractérisé en ce qu'**il comprend au moins :
- une zone d'approvisionnement (10) configurée pour loger le composant (4) de batterie ; et
- un rouleau d'entraînement et de stockage (20) du séparateur (3) configuré pour être relié à une portion d'extrémité de la bande (5), le rouleau d'entraînement et de stockage (20) comprenant des moyens motorisés pour assurer une traction sur la bande (5) du composant (4) de batterie et permettre le convoyage de la bande (5) suivant un chemin de convoyage (W) depuis la zone d'approvisionnement (10) jusqu'au rouleau d'entrainement et de stockage (20) en étant guidée par des moyens de guidage (30) de ladite bande (5) ;
les moyens de guidage (30) de la bande (5) comprenant au moins un rouleau de séparation (31), l'équipement étant configuré pour que le rouleau de séparation (31) forme un renvoi d'angle de la bande (5) le long du chemin de convoyage (W) de sorte qu'une portion aval (SB) de la bande (5) en aval du rouleau de séparation (31) par rapport au chemin de convoyage (W) présente un angle de séparation (α1) non nul avec une portion amont (5A) de la bande (5) en amont du rouleau de séparation (31), la bande (5) présentant une première face (51) d'un premier côté extérieur au rouleau de séparation (31) et une deuxième face (52) d'un deuxième côté, du côté du rouleau de séparation (31) et opposé au premier côté, les moyens de guidage (30) de la bande (5) le long du chemin de convoyage (W) et le rouleau de séparation (31) étant configurés de sorte à permettre ensemble, un décollement de l'électrode (2) de la première face (51) au moins de la bande (5) au passage de l'électrode (2) au niveau du renvoi d'angle du rouleau de séparation (31).

2. Équipement (1) selon la revendication 1, **caractérisé en ce que** le rouleau de séparation (31) présente un rayon de courbure prédéterminé configuré pour assurer, avec les moyens de guidage (30), le décollement de l'électrode (2,2') de la première face (51) de la bande (5).

3. Équipement (1) selon la revendication 2, **caractérisé en ce que** le rayon de courbure du rouleau de séparation (31) est supérieur ou égal à 1 mm, de préférence supérieur ou égal à 5 mm et/ou inférieur ou égal à 25 mm, de préférence inférieur ou égal à 15 mm.

4. Équipement (1) selon l'une quelconque des revendications précédentes, **caractérisé en ce qu'**un axe de rotation du rouleau de séparation (31) et du rouleau d'entraînement et de stockage (20) sont parallèles deux à deux, de préférence encore parallèle à un plan horizontal.

5. Équipement (1) selon l'une quelconque des revendications précédentes, **caractérisé en ce que** le rouleau de séparation (31) est positionné à un niveau verticalement au-dessus de la zone d'approvisionnement (10), le rouleau de séparation (31) étant positionné de préférence de sorte qu'une projection verticale dudit rouleau de séparation (31) est déportée latéralement d'un empilement du composant (4) de batterie qui serait logé dans la zone d'approvisionnement (10).

6. Équipement (1) selon l'une quelconque des revendications précédentes, **caractérisé en ce qu'**il comprend un dispositif de mesure et/ou de contrôle de la tension de la bande, le dispositif de contrôle de la tension de la bande (5) comprenant de préférence des moyens de liaison réglables entre une armature (6) de l'équipement (1) et l'un au moins des rouleaux (20, 30, 31), de préférence au moins le rouleau de séparation (31), pour permettre un réglage de la tension de la bande (5).

7. Équipement (1) selon la revendication précédente, **caractérisé en ce qu'**il comprend des moyens de commande configurés pour piloter les moyens motorisés du rouleau d'entraînement et de stockage (20), de préférence en fonction de paramètres extérieurs.

8. Équipement (1) selon l'une quelconque des revendications précédentes, **caractérisé en ce que** le rouleau de séparation (31) est associé à au moins un rouleau complémentaire (31') disposé à une distance prédéterminée du rouleau de séparation (31), le rouleau complémentaire (31') étant disposé de préférence verticalement en-dessous du rouleau de séparation (31).

9. Équipement (1) selon la revendication 8, **caractérisé en ce qu'**il est configuré de sorte que l'espace entre le rouleau de séparation (31) et le rouleau complémentaire (31') est supérieur ou égal à une épaisseur du séparateur (3) et/ou inférieur ou égal à une épaisseur correspondant à la somme de l'épaisseur du séparateur et d'une épaisseur d'une électrode.

10. Équipement (1) selon l'une quelconque des revendications précédentes, **caractérisé en ce que** la zone d'approvisionnement (10) comporte un support (11) destiné à supporter une partie empilée du composant (4) de batterie, le support (11) étant de préférence plan et comportant des moyens de calage de ladite partie empilée du composant (4) de batterie pour maintenir sa position sur le support (11).

11. Équipement (1) selon l'une quelconque des revendications précédentes, **caractérisé en ce que** les moyens de guidage (30) de la bande (5) le long du chemin de convoyage (W) comportent une pluralité de rouleaux de guidage (33, 34) distincts du rouleau de séparation (31) disposés de préférence successivement en aval du rouleau de séparation (31) par rapport au chemin de convoyage (W).

12. Équipement (1) selon la revendication précédente, **caractérisé en ce que** les rouleaux de guidage (33, 34) comprennent un rouleau de guidage amont (33) et un rouleau de guidage aval (34) entre lesquels peut être tendue une portion de bande à contrôler (57) située dans une zone de contrôle (7), l'équipement étant configuré de préférence de sorte que les rouleaux de guidage amont et aval (33, 34) sont sensiblement alignés suivant un axe vertical de sorte que la portion de bande à contrôler (57) est tendue verticalement, un axe de rotation du rouleau de séparation (31) et les axes de rotations associés aux rouleau de guidage amont et aval (33, 34) étant de préférence encore parallèles deux à deux, de préférence encore parallèle à un plan horizontal.

13. Équipement (1) selon l'une quelconque des revendications précédentes, **caractérisé en ce qu'**il comprend des moyens de contrôle (70) configurés pour acquérir des données de la portion à contrôler (57) de la bande (5), de préférence de la première face (51) de la bande (5) au niveau de la portion à contrôler (57), les moyens de contrôle (70) comprenant de préférence au moins un capteur (71), de préférence un capteur optique tel qu'une caméra (72), disposé de sorte à être positionné en regard de la portion de contrôle (57) de la bande (5), le capteur (71) étant de préférence solidaire d'une armature (6) de l'équipement (1).

14. Équipement (1) selon l'une quelconque des revendications précédentes, **caractérisé en ce que** les moyens de guidage (30) comportent un second rouleau de séparation (32) distinct du rouleau de séparation (31) formant un premier rouleau de séparation, l'équipement étant configuré pour que le second rouleau de séparation (32) forme un second renvoi d'angle de la bande (5) le long du chemin de convoyage (W) de sorte qu'une portion aval (5D) de la bande (5) en aval du second rouleau de séparation (32) par rapport au chemin de convoyage (W) présente un angle de séparation (α2) non nul avec une portion amont (5C) de la bande (5) en amont du second rouleau de séparation (32), les moyens de guidage (30) de la bande (5) le long du chemin de convoyage (W) et le second rouleau de séparation (32) étant configurés de sorte à permettre ensemble, un décollement d'une électrode (2) de la seconde face (52) de la bande au passage de cette électrode (2) au niveau du second renvoi d'angle du second rouleau de séparation (32).

15. Équipement (1) selon la revendication précédente, **caractérisé en ce qu'**un axe de rotation du second rouleau de séparation (32) et du premier rouleau de séparation (31) sont parallèles deux à deux, de préférence encore parallèle à un plan horizontal.

16. Ensemble (1') d'un équipement pour la séparation d'au moins une électrode (2) d'un séparateur (3) d'un composant (4) de batterie selon l'une quelconque des revendications précédentes et du composant (4) de batterie du type comprenant un séparateur (3) en forme de bande (5) et d'au moins une électrode (2, 2', 2") en feuille.

17. Procédé de séparation d'au moins une électrode (2) d'un séparateur (3) d'un composant (4) de batterie du type du type comprenant un séparateur (3) en forme de bande (5) et d'au moins une électrode (2, 2', 2") en feuille, **caractérisé en ce qu'**il est mis en oeuvre par un équipement (1) selon l'une quelconque des revendications précédentes.

18. Procédé de séparation selon la revendication précédente, **caractérisé en ce qu'**il comprend une étape de contrôle de la bande par des moyens de contrôle (70) configurés pour acquérir des données d'une portion à contrôler (57) de la bande (5), de préférence de la première face (51) de la bande (5) au niveau de la portion à contrôler (57).
